# EUROPÄISCHE PATENTSCHRIFT

(11) **EP 1 918 648 B1**
(45) Veröffentlichungstag und Bekanntmachung des Hinweises auf die Patenterteilung: **26.12.2018**
(21) Anmeldenummer: 07017527.8
(22) Anmeldetag: 07.09.2007
(51) Int. Cl.: F24D 3/10, F24D 12/02, F24H 9/06

(54) **Kaskadeneinheit für eine Heizungsanlage**
Cascade device for a heating system
Unité de cascades pour une installation de chauffage

(30) Priorität: 31.10.2006 DE 202006016840 U
(43) Veröffentlichungstag der Anmeldung: 07.05.2008
(73) Patentinhaber: Sinusverteiler GmbH, 48493 Wettringen (DE)
(72) Erfinder: Zweers, Wilhelm, 48531 Nordhorn (DE)
(74) Vertreter: Linnemann, Winfried

(56) Entgegenhaltungen:
- EP-A- 1 243 868
- DE-U- 7 012 458
- DE-U1- 20 211 303
- DE-U1- 29 615 114
- DE-U1-202005 016 946
- DE-U1-202005 018 646
- GB-A- 2 359 873
- US-A1- 2005 258 264

## Beschreibung

Die vorliegende Erfindung betrifft eine Kaskadeneinheit für eine Heizungsanlage mit zwei oder mehr Heizkesseln, insbesondere Brennwertkesseln, mit einer hydraulischen Weiche, wobei die Kaskadeneinheit im montierten Zustand einerseits mit den Vorläufen und Rückläufen aller Heizkessel und andererseits mit mindestens je einem Heizkreisvorlauf und Heizkreisrücklauf verbunden ist, wobei die Kaskadeneinheit weiterhin je einen im wesentlichen horizontal verlaufenden Kesselvorlauf-Sammler und Kesselrücklauf-Verteiler umfasst, wobei der Kesselvorlauf-Sammler und der Kesselrücklauf-Verteiler mit der hydraulischen Weiche verbunden sind und wobei der Kesselvorlauf-Sammler und der Kesselrücklauf-Verteiler jeweils mit vorbereiteten, für eine Gruppe aus zwei oder mehr Heizkesseln angepasst platzierten Anschlüssen zum Anschließen der Heizkesselvorläufe und der Heizkesselrückläufe ausgeführt sind.

Eine Kaskadeneinheit der vorstehend genannten Art ist aus DE 202 11 303 U1 bekannt. Diese bekannte Kaskadeneinheit kann mit auf einem Boden aufstellbaren Füßen und/oder mit an einer Wand oder Decke anbringbaren Trägern ausgestattet sein. Mittels dieser Füße oder Träger kann die Kaskadeneinheit für sich ausreichend standsicher montiert werden, jedoch ist diese bekannte Kaskadeneinheit nicht in der Lage, die zugehörigen Kessel zu tragen, weil die Kessel einerseits und die Kaskadeneinheit andererseits hier nur über die Kesselvorlaufanschlüsse und Kesselrücklaufanschlüsse miteinander verbunden sind. Die Kesselvorlaufanschlüsse und Kesselrücklaufanschlüsse sind jedoch für die Aufnahme des hohen Gewichts der Kessel nicht geeignet. Es ist deshalb bisher erforderlich, die Kessel für sich an dafür geeigneten tragenden Teilen zu montieren, wobei üblicherweise bei modernen Kesseln eine hängende Anbringung an einer Wand oder einer Decke eines Heizungsraums erfolgt. Üblicherweise werden dazu zunächst an der Wand oder Decke Rahmen oder Träger angebracht, an denen dann die Kessel hängend montiert werden.

Als nachteilig wird bei diesem bekannten Stand der Technik angesehen, dass bei der Heizungsinstallation ein hoher Montageaufwand vor Ort im Heizungsraum erforderlich ist und dass außerdem ein sehr genaues Arbeiten unabdingbar ist, damit die an der Wand oder Decke angebrachten Heizkessel einerseits und die mit ihren eigenen Füßen oder Trägern ebenfalls im Heizungsraum angebrachte Kaskadeneinheit richtig zueinander positioniert werden. Erfahrungsgemäß liegt hier eine Fehlerquelle, die dazu führt, dass häufig aufwendige Anpassungsarbeiten oder Änderungsarbeiten nötig werden, wenn die Kaskadeneinheit mit den Kesseln hydraulisch verbunden wird.

Ein erster Lösungsansatz der vorstehend dargelegten Probleme des vorbekannten Standes der Technik ist in der älteren, nicht vorveröffentlichten Gebrauchsmusteranmeldung 20 2005 020 098 des Anmelders beschrieben. Hier wird eine Kaskadeneinheit vorgeschlagen, die selbst mindestens einen selbsttragenden Tragrahmen bildet, an dem (jeweils) mindestens einer der Heinzkessel anbringbar ist. Bevorzugt sind dabei der Sammler und der Verteiler in einer vertikalen Ebene oder in einer horizontalen Ebene mit Abstand zueinander angeordnet, so dass dann die Heizkessel mit einem oberen Randbereich und einem unteren Randbereich entweder hängend oder liegend mit der Kaskadeneinheit verbindbar sind. Vorteilhaft wird mit dieser Kaskadeneinheit zwar erreicht, dass nicht mehr jeweils für sich auf der einen Seite die Kaskadeneinheit und auf der anderen Seite die Trag- und Haltemittel für die Heizkessel montiert werden müssen, jedoch hat es sich als ungünstig herausgestellt, dass die Kaskadeneinheit insbesondere hinsichtlich der Anordnung von Sammler und Verteiler gegenüber vorbekannten Kaskadeneinheiten, beispielsweise gemäß dem vorstehend genannten Gebrauchsmuster 202 11 303, stark umkonstruiert werden muss. Damit besteht bei dieser Kaskadeneinheit nicht mehr die Möglichkeit, an sich schon vorhandene und gängige Kaskadeneinheiten weiter zu nutzen.

Dokument DE 70 12 458 U offenbart eine Wasserhitzungsanlage für Warmwasserheizungen mit Wassererhitzer, die an einem Rahmengestell angeordnet sind.

Für die vorliegende Erfindung stellt sich deshalb die Aufgabe, eine Kaskadeneinheit der eingangs genannte Art zu schaffen, die die dargelegten Nachteile vermeidet und mit der neben einer Verminderung des Montageaufwands bei der Installation einer Heizungsanlage auch eine kostengünstigere Vorfertigung erreicht wird.
Die Lösung dieser Aufgabe gelingt erfindungsgemäß mit einer Kaskadeneinheit der eingangs genannten Art, die dadurch gekennzeichnet ist, dass sie mindestens einen Tragrahmen aufweist oder umfasst, der in einer vertikalen Ebene angeordnet ist und an dem (jeweils) mindestens einer der Heizkessel anbringbar ist, dass der/jeder Tragrahmen auf die Oberseite des Kesselvorlauf-Sammlers und/oder des Kesselrücklauf-Verteilers aufgesetzt und von dem Kesselvorlauf-Sammler und/oder dem Kesselrücklauf-Verteiler getragen ist und dass der Kesselvorlauf-Sammler und der Kesselrücklauf-Verteiler als zum Tragen des mindestens einen Tragrahmens und der Heizkessel statisch ausreichend bemessene Hohlkörper aus Stahl ausgeführt sind.

Vorteilhaft kann die neue Kaskadeneinheit ausgehend von einer vorhandenen Einheit zu der erfindungsgemäßen Kaskadeneinheit aufgerüstet werden, indem der Tragrahmen mit dem Kesselvorlauf-Sammler und/oder Kesselrücklauf-Verteiler und/oder der Weiche so verbunden wird, dass der Tragrahmen von den genannten Teilen der Kaskadeneinheit entweder einzeln oder zu mehreren getragen ist. Somit besteht die Möglichkeit, ohne oder zumindest mit nur geringen technischen Änderungen Kaskadeneinheiten wahlweise ohne Tragrahmen, wie an sich bekannt, oder erfindungsgemäß mit Tragrahmen auszuführen. Hierdurch werden eine kostengünstige Fertigung sowie eine vereinfachte Lagerhaltung und Logistik erreicht, was Kostenvorteile bietet.

Die Oberseite des Kesselvorlauf-Sammlers und/ oder des Kesselrücklauf-Verteilers bildet eine ausreichend stabile und insbesondere horizontale Fläche, auf die der Tragrahmen mit geringem Aufwand aufgesetzt werden kann. Somit erstreckt sich der Tragrahmen von der Oberseite des Kesselvorlauf-Sammlers und/oder des Kesselrücklauf-Verteilers nach oben und damit dorthin, wo die zu halternden Heizkessel der zugehörigen Heizungsanlage angeordnet werden müssen. Damit kann der Tragrahmen eine relativ einfache Konstruktion haben.

Weiterhin schlägt die Erfindung vor, dass der Kesselvorlauf-Sammler und der Kesselrücklauf-Verteiler unmittelbar übereinander angeordnet und zu einer Sammler-Verteiler-Einheit, die den/die Tragrahmen trägt, zusammengefasst sind. Dadurch, dass der Kesselvorlauf-Sammler und der Kesselrücklauf-Verteiler unmittelbar übereinander angeordnet und zu der Sammler-Verteiler-Einheit zusammengefasst sind, ergibt sich ein besonders tragfähiges und insbesondere in Vertikalrichtung sehr biegesteifes Bauelement, das große Lasten bei geringem Gewicht aufnehmen kann. Damit können meistens, ohne dass die ohnehin vorhandenen Wandstärken von Sammler und Verteiler vergrößert werden müssten, die zu halternden Kessel getragen werden.
In weiterer Konkretisierung schlägt die Erfindung vor, dass die den Kesselvorlauf-Sammler und den Kesselrücklauf-Verteiler bildenden Hohlkörper Rechteckrohre sind. Insbesondere in Form der vorzugsweise vorgesehenen Rechteckrohre sind der Sammler und der Verteiler, sowohl einzeln als auch insbesondere in der zur Einheit zusammengefassten Ausführung, besonders stabil und belastbar. Zudem ist Stahl ein stabiles und relativ leicht verarbeitbares Material, das sowohl hinsichtlich der Beständigkeit gegenüber Wasser als auch hinsichtlich der Belastbarkeit durch die zu tragenden Heizkessel gute Eigenschaften aufweist.
Zu einer weiteren Vereinfachung der Installation einer Heizungsanlage mit der erfindungsgemäßen Kaskadeneinheit trägt bei, dass diese bevorzugt mindestens eine Standkonsole zum stehenden Aufstellen der Kaskadeneinheit auf dem Boden eines Heizungsraumes oder mindestens eine Wandkonsole zur hängenden Anbringung der Kaskadeneinheit an einer Wand eines Heizungsraums aufweist. Somit umfasst die Kaskadeneinheit nicht nur den Tragrahmen zur Halterung der Heizkessel, sondern auch die nötigen Mittel zur Anordnung der Kaskadeneinheit auf dem Boden oder an der Wand eines Heizungsraums für die Heizungsanlage. Damit müssen vor Ort vor der Installation der Heizungsanlage keinerlei Träger oder Konsolen oder dergleichen Elemente für die Heizkessel angebracht werden, was dazu beiträgt, Montagefehler zu vermeiden.

Damit der Tragrahmen die von den daran gehalterten Heizkesseln erzeugten Belastungen dauerhaft schadlos aufnehmen kann, ist bevorzugt vorgesehen, dass der/jeder Tragrahmen aus miteinander verbundenen, vorzugsweise miteinander verschweißten, vertikalen und horizontalen Rahmenstreben , vorzugsweise in Form von Rechteckhohlprofilabschnitten, aus Stahl besteht.

Da es auf dem Heizungsanlagenmarkt unterschiedliche Heizkessel gibt, die beispielsweise unterschiedliche Höhen aufweisen, ist gemäß einer weiteren Ausgestaltung der Erfindung vorgesehen, dass der/jeder Tragrahmen relativ zur übrigen Kaskadeneinheit höhenverstellbar ist. Auf diese Weise kann der Tragrahmen der Kaskadeneinheit an unterschiedliche Heizkessel angepasst werden. Die horizontalen Abstände der Vorlauf- und Rücklaufanschlüsse der Heizkessel sind üblicherweise normiert, so dass hier keine Verstellbarkeit des Tragrahmens und/oder der Kaskadeneinheit nötig ist.

Um die zuvor erwähnte Höhenverstellung technisch möglichst einfach und zuverlässig zu realisieren, wird weiter vorgeschlagen, dass der/jeder Tragrahmen mindestens einen vertikal verlaufenden, teleskopartig längenveränderbaren Rahmenteil umfasst.

Dabei ist konkret weiter vorgesehen, dass der/jeder längenveränderbare Rahmenteil ein Fußstück und eine darin oder daran vertikal verschieblich geführte Rahmenstrebe umfasst.

Um eine gewünschte bzw. in Abhängigkeit von den jeweils zu halternden Heinzkesseln benötigte Einstellung von Rahmenstrebe und Fußstück relativ zueinander zu sichern, ist vorgesehen, dass der/jeder längenveränderbare Rahmenteil stufenlos oder abgestuft in gewünschten Stellungen durch mindestens ein Feststellmittel arretierbar ist.

Das erwähnte Feststellmittel kann beispielsweise durch mindestens eine Klemmschraube oder durch mindestens einen durch verschiedene korrespondierende Bohrungen im Fußstück und in der Rahmenstrebe führbaren Querbolzen gebildet sein. Dabei können die Bohrungen in einem der beiden zueinander verschiebbaren Teile auch Langlöcher sein, um eine stufenlose Einstellung zu ermöglichen; der Querbolzen ist dann zweckmäßig ein Gewindebolzen, der mit einer Mutter so verspannt werden kann, dass eine beliebige Stellung von Fußstück und Rahmenstrebe relativ zueinander dauerhaft fixiert werden kann.

Um den Tragrahmen einerseits möglichst einfach und andererseits ohne die Gefahr einer Überlastung von Teilen der Kaskadeneinheit an dieser anbringen zu können, ist bevorzugt vorgesehen, dass der Tragrahmen mindestens eine Fußplatte umfasst, die mit dem Kesselvorlauf-Sammler und/oder dem Kesselrücklauf-Verteiler und/oder der Weiche fest verbunden, vorzugsweise verschweißt, oder lösbar verbunden, vorzugsweise verschraubt, ist. Durch die Fußplatte wird die durch den Tragrahmen und die daran gehalterten Heizkessel hervorgerufene Last auf eine ausreichend große Fläche verteilt, so dass am Sammler und/oder Verteiler und/oder an der Weiche keine Überlastungsschäden eintreten. Die Verbindung des Tragrahmens mit der übrigen Kaskadeneinheit kann dabei je nach Bedarf lösbar oder dauerhaft sein.

Eine Ausgestaltung der Kaskadeneinheit schlägt vor, dass diese einen einzigen Tragrahmen aufweist und dass an diesem Tragrahmen mehrere Heizkessel Seite an Seite nebeneinander halterbar sind. In dieser Ausgestaltung weisen dann zweckmäßig die Rückseiten der Heizkessel zu einer Wand des Heizungsraums, wobei dann die Anordnung aus Kaskadeneinheit mit integriertem Tragrahmen und Heizkesseln relativ nah vor einer Wand positioniert werden kann, um eine platzsparende Anordnung in einem Heizungsraum der Heizungsanlage zu erreichen.

Alternativ kann die Kaskadeneinheit einen einzigen oder zwei parallele Tragrahmen aufweisen, wobei an diesem oder diesen Tragrahmen ein oder mehrere Paare von Heizkesseln Rücken an Rücken halterbar sind. In dieser Ausführung kann die Kaskadeneinheit mit Tragrahmen und daran gehalterten Heizkesseln zentral in einem Heizungsraum angeordnet werden, da die Heizkessel jeweils paarweise Rücken an Rücken angeordnet sind. Die Vorderseiten von zwei Rücken an Rücken angeordneten Heizkesseln weisen dann in entgegengesetzte Richtungen, so dass von zwei Seiten her die Kaskadeneinheit zugänglich sein muss, wozu sich die erwähnte zentrale Anordnung in einem Heizungsraum der Heizungsanlage anbietet.

Um mit möglichst geringem Aufwand und in kurzer Zeit die Heizkessel an dem oder den Tragrahmen anbringen zu können, ist bevorzugt vorgesehen, dass der/jeder Tragrahmen vorbereitete, an die zu halternden Heizkessel angepasste Kesselhalteelemente aufweist. Die Kesselhalteelemente können dabei integraler Bestandteil des Tragrahmens oder der Tragrahmen sein. Alternativ können die Kesselhalteelemente auch in Form eines oder mehrerer Anbauteile ausgeführt sein, die an dem eigentlichen Tragrahmen angebracht werden. Damit können an einer Ausführung des Tragrahmens dann auch unterschiedliche Heizkessel gehaltert werden.

Schließlich ist erfindungsgemäß noch vorgesehen, dass die Kaskadeneinheit Halteelemente und/oder Anschlüsse für weitere Komponenten, insbesondere für Ausdehnungsgefäße, Entlüftungsarmaturen, Fühler, Regelgeräte und andere Armaturen und/oder Funktionselemente einer zugehörigen Heizungsanlage, aufweist.

Im Folgenden wird ein Ausführungsbeispiel der Erfindung anhand einer Zeichnung erläutert. Die Figuren der Zeichnung zeigen:
- Figur 1: eine Kaskadeneinheit in Frontalansicht,
- Figur 2: die Kaskadeneinheit aus Figur 1 in Draufsicht,
- Figur 3: die Kaskadeneinheit nach dem Anbringen von Heizkesseln in Frontalansicht und
- Figur 4: die Kaskadeneinheit mit Heizkesseln aus Figur 3 in Draufsicht.

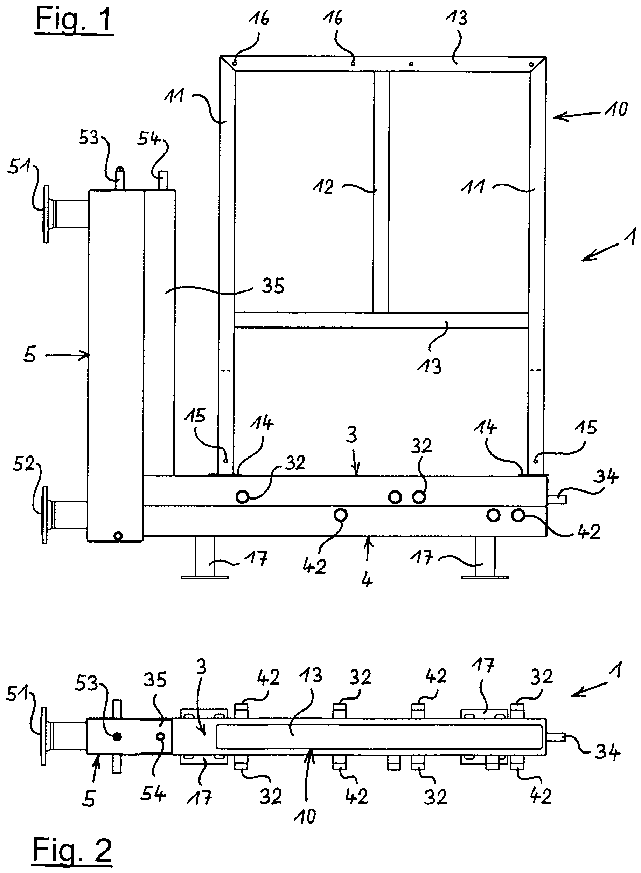

Figur 1 zeigt eine Kaskadeneinheit 1 vor der Anbringung von Heizkesseln in einer Frontalansicht. Unten in Figur 1 sind ein Kesselvorlauf-Sammler 3 und ein Kesselrücklauf-Verteiler 4 dargestellt, die horizontal und parallel zueinander verlaufen und zu einer Baueinheit zusammengefasst sind. Dabei nimmt der Sammler 3 den oberen Teil und der Verteiler 4 den unteren Teil der Baueinheit aus Sammler 3 und Verteiler 4 ein. An ihrem in Figur 1 linken Stirnende ist die Baueinheit aus Sammler 3 und Verteiler 4 mit einer hydraulischen Weiche 5 verbunden, die ein vertikal ausgerichtetes Gehäuse aufweist, das von der Baueinheit aus Sammler 3 und Verteiler 4 nach oben verläuft. Der Sammler 3 ist über eine Vorlaufverbindung 35 strömungsmäßig mit dem oberen Bereich der hydraulischen Weiche 5 verbunden, während der Verteiler 4 an seinem linken Stirnende unmittelbar mit dem unteren Bereich der Weiche 5 strömungsmäßig verbunden ist. An ihrer nach links weisenden Seite weist die hydraulische Weiche oben einen Heizkreisvorlaufanschluss 51 und unten einen Heizkreisrücklaufanschluss 52 auf.

Der Kesselvorlauf-Sammler 3 und der Kesselrücklauf-Verteiler 4 sind an ihrer in Figur 1 dem Betrachter zugewandten Vorderseite sowie auf der entgegengesetzten Rückseite mit vorbereiteten Vorlaufanschlüssen 32 und Rücklaufanschlüssen 42 ausgestattet, die zur Verbindung mit den entsprechenden Anschlüssen an zugehörigen Heizkesseln, die in Figur 1 noch nicht montiert sind, dienen.

Unterseitig sind an dem Kesselrücklauf-Verteiler 4 mit Abstand zueinander zwei Standkonsolen 17 angebracht, die zum Aufstellen der Kaskadeneinheit 1 auf dem Boden eines Heizungsraums einer zugehörigen Heizungsanlage dienen.

Soweit wie bisher beschrieben entspricht die Kaskadeneinheit 1 gemäß Figur 1 dem vorbekannten Stand der Technik.

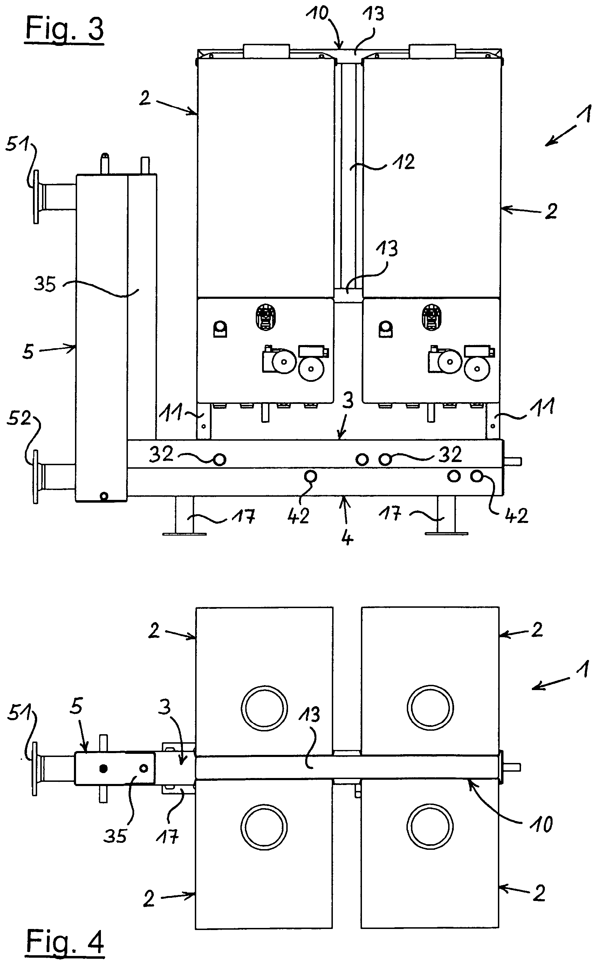

Neu ist bei der dargestellten Kaskadeneinheit 1 gemäß Figur 1 ein Tragrahmen 10, der auf die Oberseite des Kesselvorlauf-Sammlers 3 aufgesetzt ist. Der Tragrahmen 10 dient dazu, mehrere Heizkessel zu haltern, was später anhand von Figur 3 und 4 noch gezeigt und erläutert wird.

Zur Verbindung des Tragrahmens 10 mit der übrigen Kaskadeneinheit 1 besitzt der Tragrahmen 10 zwei vertikale seitliche Rahmenstreben 11, die an ihrem unteren Ende jeweils ein Fußstück 14 aufweisen, das an der Oberseite des Kesselvorlauf-Sammlers 3 lösbar oder dauerhaft befestigt ist, beispielsweise durch Verschraubung oder Verschweißung. Neben den beiden seitlichen vertikalen Rahmenstreben 11 besitzt der Tragrahmen eine obere horizontale Querstrebe 13 und im Abstand dazu nach unten versetzt eine zweite horizontale Querstrebe 13. Parallel zu den seitlichen Rahmenstreben 11 verläuft mittig im Tragrahmen 10 zwischen den beiden horizontalen Querstreben 13 noch eine vertikale Mittelstrebe 12. Die Einzelteile des Tragrahmens 10 bestehen hier aus Rechteckprofilabschnitten aus Stahl, die miteinander verschweißt sind.

In ihrem unteren Bereich sind die vertikalen Rahmenstreben 11 in ihrer Länge verstellbar, wozu sie teleskopartig ausgeführt sind. Mittels in der Zeichnungsfigur nur angedeuteter Feststellmittel 15 können die Rahmenstreben 11 und kann damit der Tragrahmen 10 insgesamt höhenmäßig verstellt und in einer gewünschten Höhenlage relativ zur übrigen Kaskadeneinheit 1 festgelegt werden. Damit kann der Tragrahmen 10 an unterschiedlich hohe Heizkessel angepasst werden und es können die an den Heizkesseln vorgesehenen Anschlüsse in einen gewünschten Abstand von den Vorlauf- und Rücklaufanschlüssen 32, 42 am Sammler 3 und Verteiler 4 gebracht werden.

Zur Anbringung der Heizkessel an dem Tragrahmen 10 besitzt letzterer mehrere Kesselhalteelemente 16, die im einfachsten Fall durch Bohrungen gebildet sind, durch welche Schrauben zur Halterung der Heizkessel führbar sind. Die Kesselhalteelemente 16 sind dabei selbstverständlich so angeordnet und ausgebildet, dass ein zugehöriger Heizkessel möglichst schnell und einfach sowie sicher an dem Tragrahmen 10 angebracht werden kann. Ein separater Tragrahmen, der an einer Wand oder auf dem Boden oder an der Decke des Heizungsraums befestigt werden muss, ist hier nicht mehr erforderlich. Vielmehr ist hier der Tragrahmen 10 nun integraler Bestandteil der Kaskadeneinheit 1, was die Installation der Heizungsanlage vereinfacht.

Auf der Oberseite der hydraulischen Weiche 5 sind hier zwei Anschlüsse 53 und 54 für einen Entlüfter und einen Temperaturfühler vorgesehen. Ein weiterer Fühleranschluss 34 ist am rechten Ende des Kesselvorlauf-Sammlers 3 angebracht. Zusätzlich umfasst die Kaskadeneinheit 1 weitere, nicht bezifferte Anschlüsse, wie sie an sich von Kaskadeneinheiten bekannt sind.

Figur 2 zeigt die Kaskadeneinheit 1 aus Figur 1 in Draufsicht, wobei eine schmale, platzsparende Bauweise der Kaskadeneinheit 1 deutlich wird. Ganz oben liegt dem Betrachter zugewandt die obere horizontale Querstrebe 13 des Tragrahmens 10, unter dem der Kesselvorlauf-Sammler 3 erkennbar ist. Der Kesselrücklauf-Verteiler 4 liegt unter dem Sammler 3 und ist hier nicht sichtbar. Von dem Kesselvorlauf-Sammler 3 gehen nach vorne und hinten, das heißt gemäß Figur 2 nach unten und oben, die Vorlaufanschlüsse 32 zum Anschluss der Vorläufe der zugehörigen Heizkessel ab; in jeweils spiegelbildlicher Anordnung gehen von dem Kesselrücklauf-Verteiler die Rücklaufanschlüsse 42 zum Anschluss der Rückläufe der Heizkessel vom Verteiler 4 ab.

Links in Figur 2 ist die hydraulische Weiche 5 sichtbar, an deren nach rechts weisender Seite die Vorlaufverbindung 35 anliegt. Nach links geht von der hydraulischen Weiche 5 der Heizkreisvorlaufanschluss 51 ab, der den unten liegenden Heizkreisrücklaufanschluss verdeckt.

Im Hintergrund der Figur 2 sind noch die beiden Standkonsolen 17 teilweise erkennbar, die zur Anbringung der Kaskadeneinheit 1 auf dem Boden eines Heizungsraums der zugehörigen Heizungsanlage dienen. Dabei werden zweckmäßig die Standkonsolen 17 mittels jeweils mehrer Schrauben mit dem Boden verbunden.

Die Figuren 3 und 4 zeigen die Kaskadeneinheit 1 gemäß den Figuren 1 und 2 nach der Anbringung von Heizkesseln 2, wobei hier die Kaskadeneinheit 1 zur Anbringung von vier Heizkesseln 2 ausgelegt ist.

Figur 3 zeigt die Kaskadeneinheit 1, nun mit den Heizkesseln 2, in gleicher Frontalansicht wie Figur 1, wobei nun zwei der insgesamt vier Heizkessel 2 sichtbar sind. Die dem Betrachter zugewandten Heizkessel 2 sind nebeneinander an der dem Betrachter zugewandten Seite des Tragrahmens 10 gehaltert, wobei ersichtlich wird, dass die Breite und Höhe des Tragrahmens 10 an die Breite und Höhe der zwei nebeneinander angeordneten Heizkessel 2 angepasst ist. Für Heizkessel 2 anderer Abmessungen kann entweder der Tragrahmen 10, wie in Zusammenhang mit Figur 1 erläutert, verstellt werden, oder es kann ein anderer Tragrahmen 10 mit der übrigen Kaskadeneinheit 1 verbunden werden.

Zum hydraulischen Anschluss der Heizkessel 2 müssen nach dem Anbringen der Kessel 2 an dem Tragrahmen 10 nur noch kurze Rohrstücke eingefügt werden, die jeweils über einen 90°-Bogen die Vorlaufanschlüsse 32 und die Rücklaufanschlüsse 42 mit den jeweils darüberliegenden Anschlüssen der Kessel 2 verbinden.

Hinsichtlich der weiteren in Figur 3 sichtbaren Teile der Kaskadeneinheit 1 wird auf die vorhergehende Beschreibung der Figuren 1 und 2 verwiesen.

Figur 4 zeigt die Kaskadeneinheit 1 mit den Heizkesseln 2 aus Figur 3 in Draufsicht. Hier wird besonders deutlich, wie die vier Heizkessel der Kaskadeneinheit 1 angeordnet sind, nämlich in zwei Paaren, wobei jeweils zwei Heizkessel nebeneinander bzw. Rücken an Rücken angeordnet sind, so dass sich eine annähernd quadratische Anordnung ergibt. Diese Ausführung der Kaskadeneinheit 1 mit den vier in einem Quadrat oder Rechteck angeordneten Heizkesseln 2 eignet sich zur freien Aufstellung im Zentrum eines Heizungsraums, so dass dann alle vier Heizkessel 2 von ihrer Frontseite, wo Bedienungs- und Anzeigeelemente angeordnet sind, zugänglich sind. Da zusätzlich zu der Kaskadeneinheit 1, die schon den Tragrahmen 10 umfasst, keine separaten Tragelemente für die Heizkessel 2 montiert und angebracht werden müssen, ist die Aufstellung der Heizungsanlage besonders einfach, was insbesondere für die freie Aufstellung im Zentrum eines Heizungsraums gilt, wo keine Raumwände zur Anbringung der Heizkessel 2 zur Verfügung stehen.

Abweichend von der Ausführung gemäß den Figuren 3 und 4 kann die Kaskadeneinheit 1 wahlweise auch nur einseitig mit zwei Heizkesseln 2 bestückt werden, wobei dann eine Anordnung der Kaskadeneinheit 1 mit zwei nebeneinander angeordneten Heizkesseln 2 unmittelbar vor einer Wand eines Heizungsraums der Heizungsanlage möglich ist. Zum Auffangen von Kippmomenten kann der Tragrahmen 10 zur Sicherheit über ein kurzes Verbindungselement mit der benachbarten Wand oder der Decke des Heizungsraums verbunden werden. Außerdem besteht die Möglichkeit, die Kaskadeneinheit 1 und den Tragrahmen 10 zur Aufnahme von mehr als zwei oder vier Heizkesseln auszuführen, indem die Einheit aus Sammler 2 und Verteiler 4 horizontal entsprechend verlängert und der Tragrahmen 10 ebenfalls entsprechend breiter ausgeführt wird.

## Patentansprüche

1. Kaskadeneinheit (1) für eine Heizungsanlage mit zwei oder mehr Heizkesseln (2), insbesondere Brennwertkesseln, mit einer hydraulischen Weiche (5), die im montierten Zustand einerseits mit den Vorläufen und Rückläufen aller Heizkessel (2) und andererseits mit mindestens je einem Heizkreisvorlauf (51) und Heizkreisrücklauf (52) verbunden ist, wobei die Kaskadeneinheit (1) weiterhin je einen im Wesentlichen horizontal verlaufenden Kesselvorlauf-Sammler (3) und Kesselrücklauf-Verteiler (4) umfasst, wobei der Sammler (3) und der Verteiler (4) mit der hydraulischen Weiche (5) verbunden sind und wobei der Kesselvorlauf-Sammler (3) und der Kesselrücklauf-Verteiler (4) jeweils mit vorbereiteten, für eine Gruppe aus zwei oder mehr Heizkesseln (2) angepasst platzierten Anschlüssen (32, 42) zum Anschluss der Heizkesselvorläufe und der Heizkesselrückläufe ausgeführt sind,
**dadurch gekennzeichnet,**
**dass** die Kaskadeneinheit (1) mindestens einen Tragrahmen (10) aufweist oder umfasst, der in einer vertikalen Ebene angeordnet ist und an dem (jeweils) mindestens einer der Heizkessel (2) anbringbar ist,
**dass** der/jeder Tragrahmen (10) auf die Oberseite des Kesselvorlauf-Sammlers (3) und/oder des Kesselrücklauf-Verteilers (4) aufgesetzt und von dem Kesselvorlauf-Sammler (3) und/oder dem Kesselrücklauf-Verteiler (4) getragen ist und
**dass** der Kesselvorlauf-Sammler (3) und der Kesselrücklauf-Verteiler (4) als zum Tragen des mindestens einen Tragrahmens (10) und der Heizkessel (2) statisch ausreichend bemessene Hohlkörper aus Stahl ausgeführt sind.

2. Kaskadeneinheit nach Anspruch 1, **dadurch gekennzeichnet, dass** der Kesselvorlauf-Sammler (3) und der Kesselrücklauf-Verteiler (4) unmittelbar übereinander angeordnet und zu einer Sammler-Verteiler-Einheit, die den/ die Tragrahmen (10) trägt, zusammengefasst sind.

3. Kaskadeneinheit nach Anspruch 1 oder 2, **dadurch gekennzeichnet, dass** die den Kesselvorlauf-Sammler (3) und den Kesselrücklauf-Verteiler (4) bildenden Hohlkörper Rechteckrohre sind.

4. Kaskadeneinheit nach einem der vorhergehenden Ansprüche, **dadurch gekennzeichnet, dass** diese mindestens eine Standkonsole (17) zum stehenden Aufstellen der Kaskadeneinheit (1) auf dem Boden eines Heizungsraums oder mindestens eine Wandkonsole zur hängenden Anbringung der Kaskadeneinheit (1) an einer Wand eines Heizungsraums aufweist.

5. Kaskadeneinheit nach einem der vorhergehenden Ansprüche, **dadurch gekennzeichnet, dass** der/jeder Tragrahmen (10) aus miteinander verbundenen, vorzugsweise miteinander verschweißten, vertikalen und horizontalen Rahmenstreben (11, 12, 13), vorzugsweise in Form von Rechteckhohlprofilabschnitten, aus Stahl besteht.

6. Kaskadeneinheit nach einem der vorhergehenden Ansprüche, **dadurch gekennzeichnet, dass** der/jeder Tragrahmen (10) relativ zur übrigen Kaskadeneinheit (1) höhenverstellbar ist.

7. Kaskadeneinheit nach einem der vorhergehenden Ansprüche, **dadurch gekennzeichnet, dass** der/jeder Tragrahmen (10) mindestens einen vertikal verlaufenden, teleskopartig längenveränderbaren Rahmenteil umfasst.

8. Kaskadeneinheit nach Anspruch 7, **dadurch gekennzeichnet, dass** der/jeder längenveränderbare Rahmenteil ein Fußstück (14) und eine darin oder daran vertikal verschieblich geführte Rahmenstrebe (11) umfasst.

9. Kaskadeneinheit nach Anspruch 7 oder 8, **dadurch gekennzeichnet, dass** der/jeder längenveränderbare Rahmenteil stufenlos oder abgestuft in gewünschten Stellungen durch mindestens ein Feststellmittel (15) arretierbar ist.

10. Kaskadeneinheit nach Anspruch 9, **dadurch gekennzeichnet, dass** das Feststellmittel (15) durch mindestens eine Klemmschraube oder durch mindestens einen durch verschiedene korrespondierende Bohrungen im Fußstück (14) und in der Rahmenstrebe (11) führbaren Querbolzen gebildet ist.

11. Kaskadeneinheit nach einem der vorhergehenden Ansprüche, **dadurch gekennzeichnet, dass** der Tragrahmen (10) mindestens eine Fußplatte (14) umfasst, die mit dem Kesselvorlauf-Sammler (3) und/oder dem Kesselrücklauf-Verteiler (4) fest verbunden, vorzugsweise verschweißt, oder lösbar verbunden, vorzugsweise verschraubt, ist.

12. Kaskadeneinheit nach einem der Ansprüche 1 bis 11, **dadurch gekennzeichnet, dass** diese einen einzigen Tragrahmen (10) aufweist und dass an diesem Tragrahmen (10) mehrere Heizkessel (2) Seite an Seite nebeneinander halterbar sind.

13. Kaskadeneinheit nach einem der Ansprüche 1 bis 11, **dadurch gekennzeichnet, dass** diese einen einzigen oder zwei parallele Tragrahmen (10) aufweist und dass an diesem Tragrahmen (10) oder diesen Tragrahmen (10) ein oder mehrere Paare von Heizkesseln (2) Rücken an Rücken halterbar sind.

14. Kaskadeneinheit nach einem der vorhergehenden Ansprüche, **dadurch gekennzeichnet, dass** der/jeder Tragrahmen (10) vorbereitete, an die zu halternden Heizkessel (2) angepasste Kesselhalteelemente (16) aufweist.

15. Kaskadeneinheit nach einem der vorhergehenden Ansprüche, **dadurch gekennzeichnet, dass** sie Halteelemente und/oder Anschlüsse (34, 53, 54) für weitere Komponenten, insbesondere für Ausdehnungsgefäße, Entlüftungsarmaturen , Fühler, Regelgeräte und andere Armaturen und/oder Funktionselemente einer zugehörigen Heizungsanlage, aufweist.

## Claims

1. A cascade device (1) for a heating system with two or more boilers (2), specifically condensing boilers, with a hydraulic shunt (5) connected, when in the installed state, to the supply lines and the return lines of all boilers (2), and also to at least one heating circuit supply line (51) and at least one heating circuit return line (52) each, with the cascade device (1) further including a substantially horizontally oriented boiler supply manifold (3) and a boiler return manifold (4), with the supply manifold (3) and the return manifold (4) being connected to the hydraulic shunt (5), and with the boiler supply manifold (3) and the boiler return manifold (4) each being designed with prefabricated connection ports (32, 42) situated and adapted for a group of two or more boilers (2), to connect the boiler supply lines and the boiler return lines,
**characterised in that**
the cascade device (1) comprises or includes at least one support frame (10) arranged in a vertical plane, and at least one of the boilers (2) being attachable to the (each) support frame (10),
the/each support frame (10) is mounted on the upper side of the boiler supply manifold (3) and/or of the boiler return manifold (4), and is supported by the boiler supply manifold (3) and/or by the boiler return manifold (4); and the boiler supply manifold (3) and the boiler return manifold (4) are designed as hollow bodies of steel that are adequately dimensioned statically to support the one or more support frames (10) and the boilers (2).

2. The cascade device according to claim 1, **characterised in that** the boiler supply manifold (3) and the boiler return manifold (4) are directly superimposed and combined to form a supply/return manifold unit carrying the support frame(s) (10).

3. The cascade device according to claim 1 or 2, **characterised in that** the hollow bodies forming the boiler supply manifold (3) and the boiler return manifold (4) are rectangular pipes.

4. The cascade device according to one of the preceding claims, **characterised in that** the device comprises at least one stand bracket (17) for the upright installation of the cascade device (1) on the floor of a boiler room or at least one wall bracket to hang the cascade device (1) on a wall of the boiler room.

5. The cascade device according to one of the preceding claims, **characterised in that** the/each support frame (10) consists of interconnected, preferably welded-together, vertical and horizontal frame struts (11, 12, 13) preferably in the shape of rectangular hollow sections of steel.

6. The cascade device according to one of the preceding claims, **characterised in that** the/each support frame (10) is vertically adjustable relative to the rest of the cascade device (1).

7. The cascade device according to one of the preceding claims, **characterised in that** the/each support frame (10) includes at least one vertically extending frame portion that is telescopically variable in length.

8. The cascade device according to claim 7, **characterised in that** the/each variable-length frame portion includes a base (14) and a frame strut (11) guided for vertical displacement thereupon.

9. The cascade device according to claim 7 or 8, **characterised in that** the/each variable-length frame portion is continuously or incrementally securable in the desired position by at least one locking device (15).

10. The cascade device according to claim 9, **characterised in that** the locking device (15) is formed by at least one clamping bolt or by at least one cross bolt capable of being guided through various corresponding bores in the base (14) and in the frame strut (11).

11. The cascade device according to one of the preceding claims, **characterised in that** the support frame (10) includes at least one baseplate (14) securely connected, preferably welded, or releasably connected, preferably screwed, to the boiler supply manifold (3) and/or to the boiler return manifold (4).

12. The cascade device according to one of claims 1 to 11, **characterised in that** the device comprises one single support frame (10) and that several boilers (2) are adapted for being held side by side on this support frame (10).

13. The cascade device according to one of claims 1 to 11, **characterised in that** the device comprises one single or two parallel support frames (10) and that one or more pairs of boilers (2) are adapted for being held back-to-back on this support frame (10) or on these support frames (10).

14. The cascade device according to one of the preceding claims, **characterised in that** the/each support frame (10) has prefabricated boiler holding elements (16) adapted to the boilers (2) to be held in place.

15. The cascade device according to one of the preceding claims, **characterised in that** the device comprises holding elements and/or connection ports (34, 53, 54) for additional components, particularly for expansion vessels, ventilation means, sensors, control devices and other fittings and/or functional elements of a related heating system.

## Revendications

1. Unité de cascades (1) pour une installation de chauffage dotée de deux chaudières (2) ou plus, notamment de chaudières à condensation, munie d'un séparateur hydraulique (5) qui est raccordé, à l'état monté, d'une part avec les canalisations montantes et les canalisations descendantes de toutes les chaudières (2) et d'autre part avec au moins à chaque fois une canalisation montante du circuit calorifique (55) et une canalisation descendante du circuit calorifique (56), l'unité de cascades (1) comprenant de plus un collecteur de canalisations montantes de chaudière (3) et un répartiteur de canalisations descendantes de chaudière (4) courant chacun sensiblement à l'horizontal, le collecteur (3) et le répartiteur (4) étant raccordés au séparateur hydraulique (5) et le collecteur de canalisations montantes de chaudière (3) et le répartiteur de canalisations descendantes de chaudière (4) étant chacun réalisés avec des raccordements (32, 42) préparés, placés de manière adaptée pour un groupe de deux chaudières (2) ou plus et destinés au raccordement des canalisations montantes de chaudière et des canalisations descendantes de chaudière,
**caractérisée en ce**
**que** l'unité de cascades (1) présente ou comprend au moins un cadre de support (10) qui est agencé dans un plan vertical et qui peut être fixé à (respectivement) l'au moins une des chaudières (2),
**que** le/chacun des cadres de support (10) est placé sur la face supérieure du collecteur de canalisations montantes de chaudière (3) et/ou du répartiteur de canalisations descendantes de chaudière (4) et est porté par le collecteur de canalisations montantes de chaudière (3) et/ou par le répartiteur de canalisations descendantes de chaudière (4), et
**que** le collecteur de canalisations montantes de chaudière (3) et le répartiteur de canalisations descendantes de chaudière (4) sont réalisés en tant que corps creux en acier suffisamment dimensionnés en termes de statique pour porter l'au moins un cadre support (10) et les chaudières (2).

2. Unité de cascades selon la revendication 1, **caractérisée en ce que** le collecteur de canalisations montantes de chaudière (3) et le répartiteur de canalisations descendantes de chaudière (4) sont agencés directement l'un au-dessus de l'autre et réunis en une unité collecteur-répartiteur qui porte le/les cadre(s) support(s) (10).

3. Unité de cascades selon la revendication 1 ou 2, **caractérisée en ce que** les corps creux constituant le collecteur de canalisations montantes de chaudière (3) et le répartiteur de canalisations descendantes de chaudière (4) sont des tuyaux à section rectangulaire.

4. Unité de cascades selon l'une quelconque des revendications précédentes, **caractérisée en ce que** celle-ci présente au moins une console sur pied (17) pour mettre l'unité de cascades (1) en position debout sur le sol d'une chaufferie, ou au moins une console murale pour fixer en suspension l'unité de cascades (1) à un mur d'une chaufferie.

5. Unité de cascades selon l'une quelconque des revendications précédentes, **caractérisée en ce que** le/chaque cadre support (10) est constitué de montants de cadre (11, 12, 13) en acier verticaux et horizontaux raccordés les uns aux autres, de préférence soudés les uns aux autres, et de préférence sous forme de portions de profilés creux à section rectangulaire.

6. Unité de cascades selon l'une quelconque des revendications précédentes, **caractérisée en ce que** le/chaque cadre support (10) est réglable en hauteur par rapport au reste de l'unité de cascades (1).

7. Unité de cascades selon l'une quelconque des revendications précédentes, **caractérisée en ce que** le/chaque cadre support (10) comprend au moins une partie de cadre courant à la verticale et modifiable en longueur de manière télescopique.

8. Unité de cascades selon la revendication 7, **caractérisée en ce que** la/ chaque partie de cadre modifiable en longueur comprend un élément de pied (14) et un montant de cadre (11) qui peut être conduit dans ledit élément de pied (14) ou sur celui-ci par déplacement dans le sens vertical.

9. Unité de cascades selon la revendication 7 ou 8, **caractérisée en ce que** la/chaque partie de cadre modifiable en longueur peut être verrouillée en continu ou par paliers dans des positions souhaitées par au moins un moyen de verrouillage (15).

10. Unité de cascades selon la revendication 9, **caractérisée en ce que** le moyen de verrouillage (15) est formé par au moins une vis de serrage ou par au moins un boulon traversant qui peut être introduit dans divers trous percés correspondants dans l'élément de pied (14) et dans le montant du cadre (11).

11. Unité de cascades selon l'une quelconque des revendications précédentes, **caractérisée en ce que** le cadre support (10) comprend au moins un socle (14) relié au collecteur de canalisations montantes de chaudière (3) et/ou au répartiteur de canalisations descendantes de chaudière (4) de manière fixe, de préférence par soudure, ou relié de manière dissociable, de préférence par vis.

12. Unité de cascades selon l'une quelconque des réclamations 1 à 11, **caractérisée en ce que** celle-ci présente un cadre support (10) unique et que plusieurs chaudières (2) peuvent être fixées côte à côte sur ledit cadre support (10).

13. Unité de cascades selon l'une quelconque des réclamations 1 à 11, **caractérisée en ce que** celle-ci présente un cadre support (10) unique ou deux cadres supports (10) parallèles et qu'une ou plusieurs paires de chaudières (2) peuvent être fixées dos à dos sur ledit cadre support (10) ou lesdits cadres supports (10).

14. Unité de cascades selon l'une quelconque des revendications précédentes, **caractérisée en ce que** le/chaque cadre support (10) présente des éléments de fixation de chaudière (16) préparés et adaptés aux chaudières (2) à fixer.

15. Unité de cascades selon l'une quelconque des revendications précédentes, **caractérisée en ce qu'**elle présente des éléments de fixation et/ou des raccordements (34, 53, 54) pour d'autres composants, notamment pour des vases d'expansion, des robinetteries de vidange, des capteurs, des appareils de régulation et autres robinetteries et/ou des éléments fonctionnels d'une installation de chauffage correspondante.
